# FASCICULE DE BREVET EUROPEEN

(11) **EP 2 004 389 B1**
(45) Date de publication et mention de la délivrance du brevet: **26.01.2011**
(21) Numéro de dépôt: 07735418.1
(22) Date de dépôt: 06.04.2007
(51) Int. Cl.: B29C 65/50, B65D 35/02, B65D 35/14

(54) **CORPS TUBULAIRE D'EMBALLAGE EN MATÉRIAU THERMOPLASTIQUE AVEC BANDE INCRUSTÉE**
SCHLAUCHFÖRMIGER VERPACKUNGSKÖRPER AUS THERMOPLASTMATERIAL MIT EINGEBETTETEM STREIFEN
PACKAGING TUBULAR BODY MADE OF THERMOPLASTIC MATERIAL WITH EMBEDDED STRIP

(30) Priorité: 06.04.2006 WO PCT/IB2006/051052; 31.07.2006 EP 06118170; 31.07.2006 EP 06118199; 24.11.2006 WO PCT/IB2006/054420
(43) Date de publication de la demande: 24.12.2008
(73) Titulaire: Aisapack Holding SA, 1896 Vouvry (CH)
(72) Inventeur: THOMASSET, Jacques, 1896 Vouvry (CH)
(74) Mandataire: Grosfillier, Philippe
(86) Numéro de dépôt international: PCT/IB2007/051249
(87) Numéro de publication internationale: WO 2007/113782

(56) Documents cités:
- EP-A- 0 187 541
- EP-A1- 0 097 689
- EP-A2- 0 177 470
- JP-A- 10 220 676

## Description

### Domaine de l'invention

L'invention se situe dans le domaine des tubes flexibles formés au moyen de films plastiques. Elle concerne plus précisément un tube flexible dont les extrémités sont soudées bout à bout.

### Etat de la technique

De nombreux tubes flexibles sont confectionnés par soudage des extrémités d'un laminé contenant au moins une couche de plastique.

La méthode de soudage la plus courante consiste à former un recouvrement des extrémités du laminé et à assembler la face intérieure sur la face supérieure du laminé voir par exemple EP0177470. Cet assemblage présente de nombreux avantages car il permet notamment d'obtenir une résistance élevée de la zone soudée, de garantir les propriétés d'hygiène vis-à-vis du produit emballé et assurer de bonnes propriétés barrière et d'étanchéité. Cependant, cet assemblage peut s'avérer insuffisant pour le conditionnement de produits agressifs qui migrent dans la zone soudée et conduisent à la délamination du laminé. Cet emballage présente également l'inconvénient de présenter une surépaisseur importante au niveau de la zone soudée, ce qui nuit aux propriétés esthétiques de l'emballage.

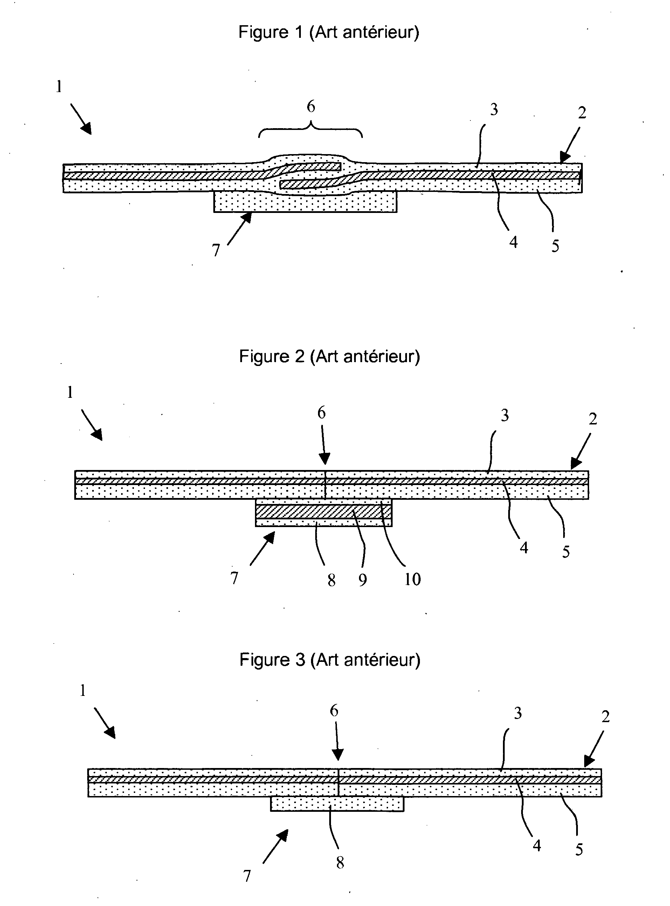

La demande de brevet EP0187541 (figure 1) propose l'utilisation d'une bande soudée à l'intérieure du tube pour protéger la zone soudée de la migration de produits agressifs. La figure 1 illustre un assemblage 1 pour emballer des produits contenant des cyanoacrylates. Selon le mode préférentiel de l'invention, le laminé 2 comporte une première couche 5 de polyéthylène haute densité (PEHD) en contact avec le produit emballé, une couche d'aluminium 4 et une deuxième couche 3 de PEHD en surface externe. Le laminé 2 comprend également une couche de polyéthylène imine (PEI) et une couche d'éthylène acide acrylique copolymère (EAA) entre les couches 5 et 4 ainsi qu'une couche d'EAA entre les couches 4 et 3 afin de garantir une bonne adhésion entre les couches 3, 4 et 5. Les extrémités du laminé 2 forment un recouvrement dans la zone soudée 6. La bande 7 en PEHD est soudée sur la face interne de l'assemblage 1 et se trouve à l'intérieur du tube. La bande 7 permet de ralentir la diffusion des cyanoacrylates dans la zone soudée et évite les problèmes de délamination.

Le brevet US4733800 (figure 2) divulgue l'utilisation d'une bande soudée à l'intérieur d'un tube plastique afin de supprimer l'effet de retour élastique de l'emballage lorsqu'il est comprimé pour extraire le produit. Ce retour élastique appelé aussi « dead fold » par l'homme du métier fait entrer de l'air dans l'emballage au fur et à mesure que ce dernier se vide, ce qui résulte en une oxydation accélérée du produit emballé. Pour palier à cet inconvénient, le brevet US4733800 propose l'utilisation d'une bande soudée à l'intérieur du tube et comprenant une couche métallique. Le tube est formé par l'assemblage 1 d'un laminé 2 soudé bout à bout. Ledit laminé 2 comporte au moins une couche métallique 4 d'épaisseur comprise entre 5 et 40 microns et une couche 5 soudante. La bande 7 soudée sur la face interne de l'assemblage 1 se superpose aux extrémités du laminé 2 au niveau de la zone de soudage bout à bout 6. La bande 7 située à l'intérieur du tube comporte au moins une couche métallique d'épaisseur comprise ente 40 et 200 microns ainsi que deux couches soudantes 8 et 10. Ladite bande 7 permet d'éviter le retour élastique du tube lors de l'extraction du produit, et renforce la zone soudée du fait de l'épaisseur de la couche métallique 9. Cependant l'invention décrite dans le brevet US4733800 présente plusieurs inconvénients majeurs. Un premier inconvénient réside dans le fait que la couche métallique 9 se trouve en contact direct avec le produit emballé ce qui crée des problèmes lorsque le produit est alimentaire. Un deuxième inconvénient est lié à l'épaisseur importante de la bande qui rend difficile voire impossible l'assemblage de la tête du tube sur le corps tubulaire.

La demande de brevet JP06166107 (figure 3) propose l'utilisation d'une bande soudée à l'intérieur du tube afin de palier aux inconvénients du soudage par recouvrement des extrémités du laminé. La demande de brevet JP06166107 propose notamment d'éviter le contact des couches barrières avec le produit emballé en positionnant les extrémités du laminé bout à bout et en soudant une bande qui relie lesdites extrémités. Un tube est formé de l'assemblage 1 d'un laminé 2 dont les extrémités sont positionnées bout à bout. Les extrémités 6 ne sont pas soudées entre elles ; elles sont reliées par l'intermédiaire de la bande 7 soudée sur la face inférieure du laminé. Selon la demande de brevet JP06166107 la bande peut comporter plusieurs couches et la couche soudée est de nature identique à la couche inférieure 5 du laminé. L'invention décrite dans la demande de brevet JP06166107 est intéressante pour associer des laminés non soudant bout à bout. Cependant, elle présente plusieurs inconvénients. Un premier inconvénient est d'ordre esthétique car la surface extérieure du tube comporte une rupture de sa surface extérieure au niveau de l'assemblage bout à bout 6. Un deuxième inconvénient est lié à la surépaisseur crée par la bande interne qui rend difficile l'assemblage de la tête de tube sur le corps tubulaire.

### Problème à résoudre

L'ajout d'une bande reliant les extrémités d'un laminé soudé bout à bout pour former des corps tubulaires présente de nombreux avantages. Cependant, les tubes formés à partir de ces corps tubulaires présentent plusieurs inconvénients.

Lorsque la bande est soudée ou collée sur la surface externe du laminé, il peut apparaître des défauts lors de l'impression du corps tubulaire ; ces défauts de décoration étant liés à la surépaisseur créée par la bande. Un autre inconvénient de l'ajout d'une bande sur la surface extérieur de l'emballage est lié au fait que le consommateur peut sentir la surépaisseur de bande lors de la prise en main de l'emballage. La sensation créée est particulièrement nuisible à l'utilisation de ces tubes sur le marché des produits cosmétiques.

Lorsque la bande est ajoutée sur la surface interne du corps tubulaire, il arrive que le soudage de la tête de tube sur le corps tubulaire pose des difficultés. Il est observé en effet que la surépaisseur créée par la bande engendre un risque de fuite de l'emballage au niveau de la tête soudée.

### Définition des termes utilisés dans l'exposé de l'invention

Dans l'exposé de l'invention les termes et abréviations suivantes sont utilisés :
Laminé : film multicouche résultant du complexage de plusieurs films
BOPET : polyéthylène téréphtalathe bi orienté
BOPP : polypropylène bi orienté
BOPA : polyamide bi orienté
PE : polyéthylène
LDPE : polyéthylène basse densité
LLDPE : polyéthylène basse densité linéaire
HDPE : polyéthylène haute densité
EVOH : éthylène alcool vinylique
Adhésif : colle utilisée lors de la confection des laminés pour associer plusieurs films
Colle : produit adhésif servant à coller la bande sur le laminé

- Soudage :: l'opération de soudage revient à assembler en faisant fondre deux matériaux de même nature ou miscibles à l'état fondu, ladite miscibilité se manifestant par la diffusion et l'interpénétration des chaînes moléculaires ; puis en faisant refroidir lesdits matériaux afin de figer l'état d'interpénétration moléculaire.
- Collage :: par opposition au soudage, le collage est défini comme une opération d'assemblage de deux matériaux n'étant pas de même nature ou immiscible à l'état fondu. Le collage peut faire intervenir des mécanismes chimiques (réaction des bouts de chaîne, réticulation), des mécanismes physiques (forces de Van des Waals, évaporation). Le collage est une opération d'assemblage pouvant être réalisée à température ambiante ou en chauffant les matériaux.

### Exposé général de l'invention

L'invention consiste à incruster au moins partiellement la bande soudée dans le laminé afin que l'épaisseur émergente de la bande soudée soit inférieure à l'épaisseur de ladite bande.

Dans le présent texte, comme on le verra par la suite, le terme "incruster" signifie indifféremment "insérer dans une surface évidée" ou "enfoncer dans une surface initialement dépourvue d'évidement".

Selon un mode de réalisation de l'invention, la bande est incrustée dans le laminé et les surfaces respectives du laminé et de la bande sont tangentes.

Le premier procédé d'incrustation consiste à exercer une pression sur ladite bande afin de la faire pénétrer dans l'épaisseur du laminé lorsque ce dernier se trouve dans un état au moins partiellement fondu.

Un deuxième procédé consiste à incruster la bande dans un laminé à l'état solide et comprend au moins une opération de mise en pression de la bande.

Un troisième procédé d'incrustation de la bande est basé sur une déformation du laminé préalablement à l'application de la bande. Ce procédé comprend une étape de déformation à chaud ou à froid du laminé afin de créer l'emplacement de la bande.

Un quatrième procédé d'incrustation consiste à créer l'emplacement de la bande par enlèvement de matière. L'épaisseur du laminé est réduite localement au niveau des extrémités afin de créer l'emplacement de la bande.

Afin de faciliter l'insertion de la bande, les bords de ladite bande peuvent être biseautés.

Lorsque la bande est incrustée sur la surface extérieure de l'emballage, l'esthétique de l'emballage n'est pas dégradée.

Lorsque la bande est incrustée sur la surface interne de l'emballage, le soudage du composant sur le corps tubulaire reste de grande qualité.

L'invention sera mieux comprise à l'aide de la description de modes d'exécution de celles-ci et des figures suivantes dans lesquelles:
Les figures 1 à 3 décrivent les principales utilisations d'une bande de soudage connues dans l'art antérieur pour relier les extrémités soudées d'un laminé.
La figure 1 illustre l'utilisation d'une bande pour limiter la migration de composants agressifs contenus dans l'emballage.
La figure 2 illustre l'utilisation d'une bande pour l'effet de retour élastique du tube lorsqu'il est comprimé pour extraire le produit.
La figure 3 illustre l'utilisation d'une bande soudée à l'intérieur du tube afin de palier aux inconvénients du soudage par recouvrement des extrémités du laminé.
Les figures 4 à 6 illustrent plusieurs modes de réalisation de l'invention.

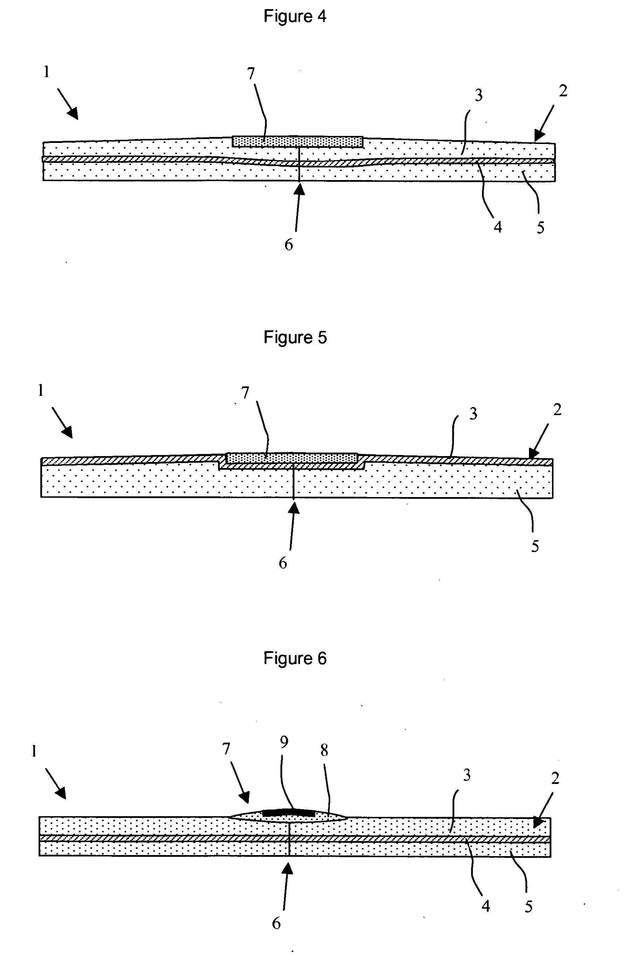

La figure 4 présente un premier exemple de réalisation de l'invention consistant à incruster au moins partiellement la bande dans la couche formant la surface de l'emballage.
La figure 5 présente un autre exemple de réalisation de l'invention consistant à incruster au moins partiellement la bande dans l'épaisseur du laminé.
La figure 6 illustre un troisième exemple de réalisation de l'invention consistant à incruster et déformer la bande.

### Exposé détaillé de l'invention

L'invention consiste en un nouveau procédé de confection de tube par soudage bout à bout des extrémités d'un laminé; le procédé consistant à ajouter une bande reliant les extrémités du laminé et à incruster au moins partiellement ladite bande dans la surface du laminé afin de supprimer les effets négatifs d'ordre esthétique ou technique liés à la présence de ladite bande ; et afin d'améliorer la résistance de l'assemblage.

La figure 4 illustre un premier exemple de réalisation de l'invention. Un corps tubulaire 1 est formé par soudage bout à bout des extrémités d'un laminé 2. Une bande 7 relie les extrémités du laminé et renforce la zone soudée 6. L'invention se caractérise par le fait que la bande 7 est incrustée dans la couche 3 formant la surface supérieure du laminé. De préférence, l'épaisseur émergente de la bande est inférieure à sa demi épaisseur. Idéalement, ladite bande est totalement incrustée dans le laminé afin que la surface de l'assemblage forme une surface lisse et continue.

Le laminé illustré figure 4 comporte une couche 3 formant la surface supérieure du laminé ; une deuxième couche 5 formant la surface inférieure du laminé et une couche 4 emprisonnée entre les couches 3 et 5 ; les dites couches 3, 4, et 5 pouvant être de nature différente ; et lesdites couches 3, 4, et 5 étant liées entre elles au niveau de leur interface. Le laminé 2 comporte généralement une ou plusieurs couches non soudante bout à bout. La couche 4 formant une fine couche à propriétés barrière n'est généralement pas soudée au niveau de ses extrémités. La couche 4 est par exemple une feuille d'aluminium ou une couche d'EVOH (éthylène alcool vinyle). Sur la figure 4, la couche 5 formant la surface interne du tube est soudée au niveau de ses extrémités afin de garantir une préservation correcte du produit emballé et éviter que le produit emballé puisse se trouver en contact avec les extrémités non soudées dudit laminé 2. Une couche 5 en polyoléfine est avantageuse. La bande 7 est rendue solidaire de la couche supérieure 3 par soudage ou collage. Lorsque la bande 7 est soudée, la bande 7 comporte au moins une couche de même nature que la couche supérieure 3 du laminé. Lorsque la bande 7 est soudée, la couche 3 est avantageusement composée de polyoléfine (PE ou PP).

La bande 7 illustrée figure 4 est préférentiellement de faible épaisseur afin de faciliter son incrustation dans la couche 3 du laminé ; ladite épaisseur étant habituellement inférieure à la demi épaisseur du laminé afin d'éviter une surépaisseur importante au niveau de la zone soudée 6. La bande 7 comprend avantageusement plusieurs couches dont une couche de grande résistance et de fine épaisseur. Cette couche de grande résistance est par exemple en polymère bi orienté. La bande peut également contenir une couche à effet barrière de fine épaisseur. La bande 7 comporte également une couche de liaison avec la couche 3 du laminé ; cette couche de liaison étant de même nature que la couche 3 lorsque la bande est soudée ; cette couche étant une colle lorsque la bande est collée sur ladite couche 3. Avec une bande comportant plusieurs couches, l'épaisseur de la bande peut être réduite et son incrustation dans l'épaisseur du laminé facilitée. La bande 7 permet de renforcer la résistance de la zone soudée 6, et palie au fait que la soudure bout à bout des extrémités du laminé présente une résistance plus faible que celle du laminé. Au minimum, la bande compense le fait que certaines couches du laminé ne sont pas soudées.

La figure 4 illustre l'incrustation d'une bande 7 sur la surface supérieure d'un laminé 2 formant la surface externe d'un corps tubulaire 1. Selon un autre mode de réalisation de l'invention, la bande 7 est incrustée dans la couche inférieure 5 du laminé formant la couche interne de l'emballage. Selon ce mode de réalisation, la bande 7 comporte au moins une couche qui se soude sur la couche 5 du laminé. De préférence la bande 7 comporte une couche de même nature que la couche 5 du laminé ; habituellement ladite couche 5 est une couche de polyoléfine. La bande 7 comporte préférentiellement une fine couche de polymère bi orientée emprisonnée entre deux couches soudantes ; une première couche permettant de souder la bande 7 à la couche 5, et une deuxième couche permettant de souder la bande 7 sur la tête de tube qui est reliée à la couche interne 5 du corps tubulaire 1.

Un autre mode de réalisation de l'invention consiste à incruster seulement les bords de ladite bande 7 ; ladite bande 7 pouvant être incrustée sur la couche supérieure 3 ou la couche inférieure 5 du laminé 2.

La figure 5 illustre un autre exemple d'incrustation d'une bande dans un laminé comprenant au moins deux couches ; une première couche supérieure 3 formant la surface supérieure du laminé et une deuxième couche 5 formant la surface inférieure du laminé et la surface interne de l'emballage. La bande 7 est fixée sur la couche 3 formant la couche supérieure de l'emballage et incrustée dans l'épaisseur du laminé ; l'incrustation de la bande 7 dans l'épaisseur de la couche 3 n'étant pas possible fait de l'épaisseur ou des propriétés de ladite couche 3. La figure 5 illustre un collage de la bande 7 sur la couche 3. Un collage de la bande 7 est particulièrement avantageux, lorsque la couche supérieure 3 est une couche de polymère bi orientée (BOPET ou BOPP) ou lorsque la couche supérieure 3 est imprimée sur sa surface externe. Une bande comportant une couche de polymère bi orientée et une couche de colle est particulièrement avantageuse du fait de sa très faible épaisseur et de sa grande transparence. La figure 5 illustre le fait que la bande est fixée sur la couche 3 et incrustée dans le laminé par déformation de la couche inférieure 5.

La figure 6 illustre un troisième exemple d'incrustation d'une bande dans l'épaisseur d'un laminé. Un corps tubulaire 1 est formé d'un laminé 2 dont les extrémités sont soudées bout à bout. Le laminé comporte une couche 3 formant la surface supérieure du laminé ; une couche 4 formant la surface inférieure du laminé et la surface interne de l'emballage ; et une couche 4 emprisonnée entre les couches 3 et 5. Généralement la couche 4 du laminé n'est pas soudée bout à bout du fait de sa faible épaisseur ou de ses propriétés. Une bande 7 est fixée sur la couche 3 du laminé et renforce la zone soudée 6. La bande 7 illustrée figure 6 comporte au moins deux couches ; une première couche 9 de grande résistante et de fine épaisseur ; et une deuxième couche 8 qui se soude sur la couche 3 du laminé. Préférentiellement, les couches 8 et 3 sont de même nature. La bande 7 est soudée et incrustée dans la couche 3 du laminé. La bande 7 s'est déformée par écoulement de la couche 8 lors de l'incrustation de ladite bande dans l'épaisseur du lainé.

Plusieurs procédés d'incrustation de la bande dans l'épaisseur du laminé peuvent être envisagés.

Un premier procédé d'incrustation de la bande consiste à enfoncer la bande dans un laminé au moins partiellement fondu et comprend au moins une opération de mise en pression de la bande. L'incrustation de la bande peut être faite conjointement ou successivement au soudage bout à bout du laminé, conjointement ou successivement au soudage ou collage de la bande sur le laminé.

Un deuxième procédé d'incrustation de la bande consiste à enfoncer la bande dans un laminé à l'état solide et comprend au moins une opération de mise en pression de la bande. L'incrustation de la bande est faite successivement au soudage bout à bout du laminé, et conjointement ou successivement au soudage ou collage de la bande sur le laminé.

Un troisième procédé d'incrustation de la bande est basé sur une déformation du laminé préalablement à l'application de la bande. Ce procédé comprend une étape de déformation à chaud ou à froid du laminé afin de créer l'emplacement de la bande. La déformation du laminé se fait préférentiellement à plat avant l'assemblage bout à bout des extrémités du laminé.

Un quatrième procédé d'incrustation consiste à créer l'emplacement de la bande par enlèvement de matière. L'épaisseur du laminé est réduite localement au niveau des extrémités afin de créer l'emplacement de la bande.

L'assemblage illustré figure 4 peut être obtenu en utilisant le premier procédé d'incrustation. Selon ce procédé, au moins la couche 3 du laminé 2 est chauffée afin de la faire fondre. Une pression est ensuite exercée sur la bande 7 afin de l'incruster dans la couche 3. Lorsque la pression est exercée sur la bande 7, la couche 3 qui est fondue se déforme. Selon ce procédé, la couche 3 doit être chauffée sur une largeur supérieure ou égale à la largeur de la bande 7. Si plusieurs couches du laminé sont chauffées lors de l'incrustation de la bande 7, l'ensemble desdites couches chauffées peut se déformer. En général, la déformation des couches est contrôlée par l'épaisseur souhaitée de la zone soudée, l'épaisseur de la zone soudée étant supérieure ou égale à l'épaisseur du laminé. Finalement, l'assemblage est refroidi au niveau de la zone soudée et de la zone d'incrustation.

Lorsque seuls les bords de la bande 7 sont incrustés dans le laminé ; le premier procédé d'incrustation consiste à exercer au moins une pression sur lesdits bords à incruster.

L'utilisation du premier procédé pour incruster la bande 7 est illustrée également figure 5. La première étape du procédé consiste à chauffer au moins la couche 5 du laminé afin de la faire fondre ; à appliquer une pression sur la bande 7 afin de l'incruster dans le laminé ; à refroidir l'assemblage.

La figure 6 illustre un autre assemblage résultant de l'utilisation du premier procédé d'incrustation. L'assemblage se caractérise par une déformation du laminé et la bande au niveau de la zone soudée. Ce procédé d'incrustation de la bande 7 dans la couche 3 du laminé 2 comprend une première étape consistant à chauffer au moins les couches 3 et 8 afin de les faire fondre ; une deuxième étape de mise en pression de la bande 7 ; et enfin une troisième étape de refroidissement de l'assemblage. Lorsque la pression est exercée sur la bande 7, les couches 3 et 8 qui sont fondues se déforment. Selon ce procédé, la couche 3 doit être chauffée sur une largeur supérieure ou égale à la largeur de la bande 7. Si plusieurs couches du laminé sont chauffées lors de l'incrustation de la bande 7, l'ensemble desdites couches chauffées peut se déformer. La déformation de la bande par écoulement de la couche 8 est particulièrement avantageuse car elle permet de supprimer les bords saillants de ladite bande, et conduit à une épaisseur de la zone soudée plus homogène. Ce procédé permet d'incruster une bande sur la surface externe ou interne de l'emballage.

Afin d'éviter les bords saillant de ladite bande et afin de faciliter l'incrustation, une coupe en biais des bords de la bande est particulièrement avantageuse.

La bande incrustée 7 peut être imprimée ou transparente ; elle peut être collée ou soudée sur la surface du laminé ; elle peut contenir une couche barrière afin de compenser une éventuelle discontinuité de la couche barrière au niveau de la zone soudée. Préférentiellement, l'épaisseur de ladite bande est inférieure à la demi épaisseur du laminé.

L'invention est particulièrement avantageuse car elle permet de réaliser des emballages en soudant bout à bout des films qui associent des couches soudantes et des couches qui ne se soudent pas bout à bout. L'invention permet d'assembler bout à bout les extrémités d'un film dont les extrémités se soudent partiellement.

L'invention permet d'obtenir des emballages soudés avec une variation d'épaisseur négligeable au niveau de la zone soudée et ayant une résistance de la zone soudée équivalente à la résistance du film. Les emballages obtenus peuvent être imprimés sur toute leur surface sans rupture de l'impression dans la zone soudée. L'invention permet l'obtention d'emballages de grande résistance et à l'esthétique améliorée.

L'invention ne se limite pas aux exemples illustrés par les figures 4 à 6. En particulier, elle ne concerne pas seulement les tubes dont les extrémités sont soudées bout à bout mais également les tubes dont les extrémités de superposent.

Par ailleurs, l'invention s'applique également à des bandes incrustées sur la surface interne des tubes.

## Revendications

1. Corps tubulaire d'emballage formé d'un laminé constitué d'au moins un matériau thermoplastique dont les extrémités sont fixées par soudage et recouvertes par une bande soudée ou collée; corps tubulaire **caractérisé par le fait que** ladite bande est au moins partiellement incrustée dans le laminé.

2. Corps tubulaire selon la revendication 1 dans lequel lesdites extrémités sont soudées bout à bout ; l'épaisseur de la zone soudée étant inférieure à la somme de l'épaisseur du laminé et de la bande.

3. Corps tubulaire selon la revendication 1 ou 2 dans lequel la bande est incrustée sur sa surface externe.

4. Corps tubulaire selon l'une quelconque des revendications précédentes dans lequel la bande est entièrement incrustée dans le laminé.

5. Corps tubulaire selon l'une quelconque des revendications précédentes dans lequel les extrémités de la bande sont biseautées.

6. Procédé de fabrication d'un corps tubulaire selon l'une quelconque des revendications précédentes comprenant une étape d'incrustation de la bande dans le laminé qui consiste à exercer une pression sur ladite bande afin de la faire pénétrer dans l'épaisseur du laminé.

7. Procédé selon la revendication 6 dans lequel le laminé est au moins partiellement fondu lors de l'incrustation de la bande.

8. Procédé selon la revendication 6 dans lequel le laminé est à l'état solide lors de l'incrustation de la bande.

9. Procédé de fabrication d'un corps tubulaire selon l'une quelconque des revendications précédentes 1 à 5 comprenant une étape de préparation d'un évidement dans le laminé suivie d'une étape lors de laquelle la bande est disposée dans l'évidement.

10. Procédé selon la revendication 8 dans lequel on prépare l'évidement par déformation de matière.

11. Procédé selon la revendication 8 dans lequel on prépare l'évidement par retrait de matière.

## Claims

1. Tubular packaging body formed from a laminate composed of at least one thermoplastic whose ends are fastened by welding and covered by a welded or bonded strip; tubular body **characterized in that** said strip is at least partially embedded in the laminate.

2. Tubular body according to claim 1, in which said ends are butt-welded; the thickness of the weld zone being less than the sum of the thickness of the laminate and of the strip.

3. Tubular body according to claim 1 or 2, in which the strip is embedded in its outer surface.

4. Tubular body according to any one of the preceding claims, in which the strip is entirely embedded in the laminate.

5. Tubular body according to any one of the preceding claims in which the ends of the strip are chamfered.

6. Method for manufacturing a tubular body according to any one of the preceding claims, comprising a step of embedding the strip in the laminate which consists in exerting a pressure on said strip in order to make it penetrate into the thickness of the laminate.

7. Method according to claim 6, in which the laminate is at least partially melted at the time the strip is embedded.

8. Method according to claim 6, in which the laminate is in the solid state at the time the strip is embedded.

9. Method for manufacturing a tubular body according to any one of the preceding claims 1 to 5, comprising a step of preparing a recess in the laminate followed by a step during which the strip is placed into the recess.

10. Method according to claim 8, in which the recess is prepared by deforming the material.

11. Method according to claim 8, in which the recess is prepared by removing material.

## Patentansprüche

1. Rohrförmiger Verpackungskörper, der aus einem Laminat geformt wird, das aus mindestens einem thermoplastischen Werkstoff hergestellt ist, dessen Enden durch Schweißen befestigt und mit einem geschweißten oder geklebten Streifen bedeckt sind, rohrförmiger Körper, der **dadurch gekennzeichnet ist, dass** der Streifen zumindest teilweise in das Laminat eingepresst ist.

2. Rohrförmiger Körper nach Anspruch 1, bei dem die Enden stumpfgeschweißt sind, wobei die Dicke der geschweißten Zone geringer als die Summe der Dicke des Laminats und des Streifens ist.

3. Rohrförmiger Körper nach Anspruch 1 oder 2, bei dem der Streifen auf seine Außenfläche eingepresst ist.

4. Rohrförmiger Körper nach einem der vorhergehenden Ansprüche, bei dem der Streifen vollständig in das Laminat eingepresst ist.

5. Rohrförmiger Körper nach einem der vorhergehenden Ansprüche, bei dem die Enden des Streifens abgeschrägt sind.

6. Verfahren zur Herstellung eines rohrförmigen Körpers nach einem der vorhergehenden Ansprüche, das einen Schritt des Einpressens des Streifens in das Laminat enthält, der darin besteht, einen Druck auf den Streifen auszuüben, um ihn in die Dicke des Laminats eindringen zu lassen.

7. Verfahren nach Anspruch 6, bei dem das Laminat beim Einpressen des Streifens zumindest teilweise geschmolzen ist.

8. Verfahren nach Anspruch 6, bei dem das Laminat beim Einpressen des Streifens im festen Zustand ist.

9. Verfahren zur Herstellung eines rohrförmigen Körpers nach einem der vorhergehenden Ansprüche 1 bis 5, das einen Schritt der Herstellung einer Aushöhlung im Laminat gefolgt von einem Schritt enthält, in dem der Streifen in der Aushöhlung angeordnet wird.

10. Verfahren nach Anspruch 8, bei dem die Aushöhlung durch spanlose Bearbeitung hergestellt wird.

11. Verfahren nach Anspruch 8, bei dem die Aushöhlung durch Materialabheben hergestellt wird.
